# EUROPEAN PATENT APPLICATION

(11) **EP 4 810 919 A1**
(43) Date of publication of application: **23.09.2026**
(21) Application number: 26160226.2
(22) Date of filing: 23.02.2026
(51) Int. Cl.: G01C 23/00, G08G 5/21, B64D 43/00, B64D 45/08

(54) **METHOD AND SYSTEM FOR GENERATING A SINGLE WIDE-ANGLE FIELD OF VIEW IN DEGRADED VISUAL ENVIRONMENT CONDITIONS**

(30) Priority: 17.03.2025 US 202563772997 P; 15.10.2025 US 202519358717
(71) Applicant: Honeywell International Inc., Charlotte, NC 28202 (US)
(72) Inventor: SAXENA, Sunit Kumar, Charlotte, 28202 (US); TYSON, III, William, Charlotte, 28202 (US)
(74) Representative: Ingrassia, Fisher & Lorenz UK Ltd.

(57) **Abstract**

A degraded visual environment (DVE) system for a vehicle includes a display device, a plurality of degraded visual environment (DVE) sensors, and a processing system. The DVE sensors are disposed at different locations on the vehicle, and each has a field-of-view and is configured to sense objects in its field-of-view and supply sensor data representative of the sensed objects. The processing system is coupled to receive the sensor data from each of the DVE sensors and is configured to process the sensor data to determine positions of the sensed objects relative to the vehicle, generate image data representative of a single display image that depicts the positions of the sensed objects relative to the vehicle, and supply image rendering display commands, based on the image data, that cause the display device to render the single display image that depicts the positions of the sensed objects relative to the vehicle.

## Description

### CROSS REFERENCE TO RELATED APPLICATION

The present application claims benefit of prior filed U.S. Provisional Patent Application No. 63/772,997, filed March 17, 2025, which is hereby incorporated by reference herein in its entirety.

### TECHNICAL FIELD

The present disclosure generally relates to aircraft operations in degraded visual environment conditions, and more specifically to a system and method for generating a single wide-angle view in degraded visual environment conditions.

### BACKGROUND

Various environmental and weather conditions, such as clouds, rain, snow, fog, dust, sand, smoke, smog, flat light, brownouts, whiteouts, and blackouts, may cause a pilot's vision to be limited. These conditions, which are generally referred to as degraded visual environment (DVE), can significantly impact the ability of the pilot to operate the aircraft, especially during take-off and landing operations. Although various DVE mitigation systems have been developed, the current systems exhibit certain drawbacks. For example, the current solutions are limited in directionality. That is, typically providing sensing capability in a single, fixed direction - the forward-facing direction. This limits the situational awareness of the pilot to that single, fixed direction.

Hence, there is a need for a DVE mitigation (DVEM) system that is not limited to providing aircraft pilots situational awareness in a single, fixed direction. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a degraded visual environment mitigation system for a vehicle includes a display device, a plurality of degraded visual environment (DVE) sensors, and a processing system. The display device is responsive to image rendering display commands to display one or more images. The DVE sensors are disposed at different locations on the vehicle. Each DVE sensor has a field-of-view, and each DVE sensor is configured to sense objects in its field-of-view and supply sensor data representative of the sensed objects. The processing system is in operable communication with the display device and the DVE sensors. The processing system is coupled to receive the sensor data supplied from each of the DVE sensors and is configured, upon receipt of the sensor data, to process the sensor data from each of the DVE sensors to (i) determine positions of the sensed objects relative to the vehicle, (ii) generate image data representative of a single display image that depicts the positions of the sensed objects relative to the vehicle, and (iii) supply image rendering display commands, based on the image data, that cause the display device to render the single display image that depicts the positions of the sensed objects relative to the vehicle.

In another embodiment, a degraded visual environment mitigation (DVEM) system for a vehicle includes a display device, a plurality of degraded visual environment (DVE) sensors, and a processing system. The display device is responsive to image rendering display commands to display one or more images. The DVE sensors are disposed at different locations on the vehicle. Each DVE sensor has a field-of-view, and each DVE sensor is configured to sense objects in its field-of-view and supply sensor data representative of the sensed objects. The processing system is in operable communication with the display device and the DVE sensors. The processing system is coupled to receive the sensor data supplied from each of the DVE sensors and is configured, upon receipt of the sensor data, to process the sensor data from each of the DVE sensors to (i) determine positions of the sensed objects relative to the vehicle, (ii) generate image data representative of a single display image that depicts the positions of the sensed objects relative to the vehicle, and (iii) supply image rendering display commands, based on the image data, that cause the display device to render the single display image that depicts the positions of the sensed objects relative to the vehicle. The single display image comprises: a top-down view vehicle image, which is an image of the vehicle as viewed from above the vehicle looking down; a forward horizon line image, which is an image of a first horizon line that is disposed forward of the vehicle; a rearward horizon line image, which is an image of a second horizon line that is disposed behind of the vehicle; a left horizon line image, which is an image of a third horizon line that is disposed left of the vehicle; a right horizon line image, which is an image of a fourth horizon line that is disposed right of the vehicle; and symbols representative of the sensed objects at positions relative to the top-down view vehicle image, the first horizon line, the second horizon line, the third horizon line, and the fourth horizon line.

In yet another embodiment, a degraded visual environment mitigation (DVEM) system for a vehicle includes a display device, a plurality of vehicle lighting assemblies, a plurality of degraded visual environment (DVE) sensors, and a processing system. The display device is responsive to image rendering display commands to display one or more images. Each vehicle lighting assembly includes a vehicle light mounted on or within a housing assembly. The DVE sensors are disposed at different locations on the vehicle. Each DVE sensor has a field-of-view, and each DVE sensor is mounted on or within a different one of the housing assemblies and is configured to sense objects in its field-of-view and supply sensor data representative of the sensed objects. The processing system is in operable communication with the display device and the DVE sensors. The processing system is coupled to receive the sensor data supplied from each of the DVE sensors and is configured, upon receipt of the sensor data, to process the sensor data from each of the DVE sensors to (i) determine positions of the sensed objects relative to the vehicle, (ii) generate image data representative of a single display image that depicts the positions of the sensed objects relative to the vehicle, and (iii) supply image rendering display commands, based on the image data, that cause the display device to render the single display image that depicts the positions of the sensed objects relative to the vehicle.

Furthermore, other desirable features and characteristics of the degraded visual environment system will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional schematic diagram of one embodiment of degraded visual environment (DVE) mitigation system for a vehicle; and
FIG. 2 depicts one embodiment of a vehicle that may include the system of FIG. 1;
FIG. 3 depicts one example of potential housing of a DVE sensor used in the system of FIG. 1; and
FIG. 4 depicts a representation of one embodiment of a single display image that may be rendered on the display device of the system of FIG. 1; and
FIG. 5 depicts a representation of another embodiment of a single display image that may be rendered on the display device of the system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

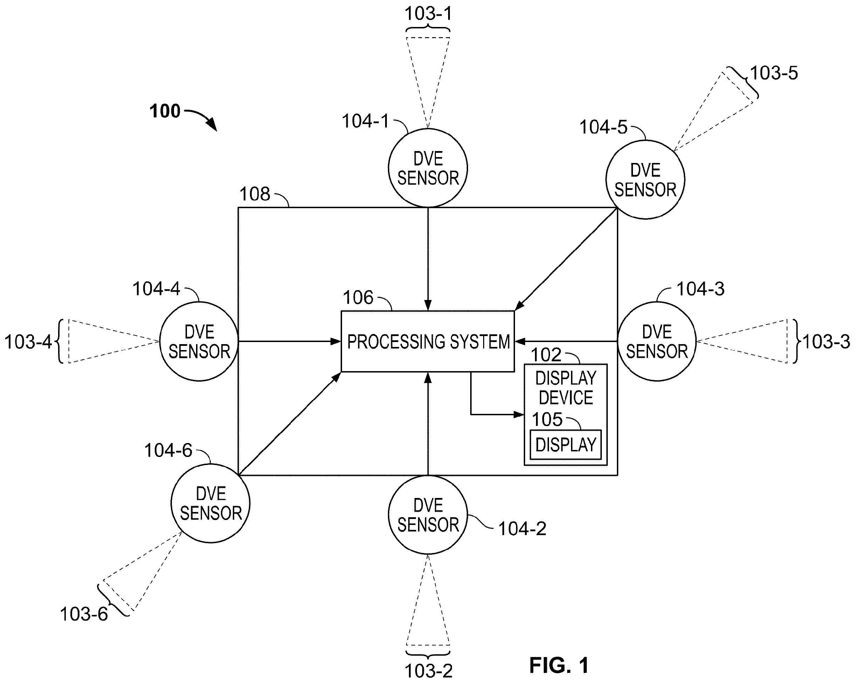

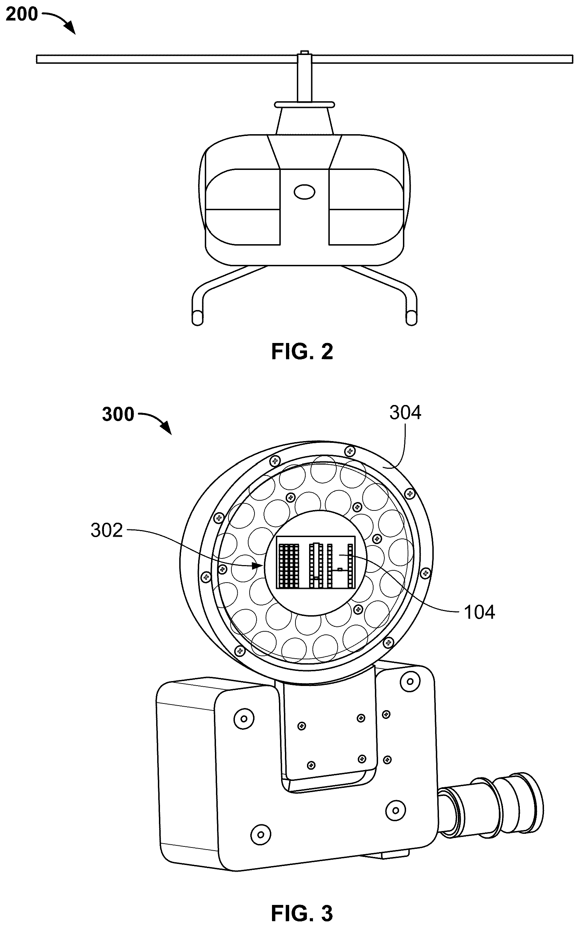

Referring to FIG. 1, a functional schematic diagram of one embodiment of a degraded visual environment mitigation (DVEM) system for a vehicle is depicted. The system 100, at least in the depicted embodiment, includes a display device 102, a plurality of DVE sensors 104, and a processing system 106, all of which are disposed on or within a vehicle 108. Before proceeding further, it is noted that the vehicle 108 may be any one of numerous types of land vehicles, marine vehicles, or air vehicles. In one particular embodiment, the vehicle is an aircraft, such as the example rotorcraft 200 depicted in FIG. 2.

The display device 102 is responsive to image rendering display commands to display one or more images on a display 105. The display device 102 may be implemented using any one of numerous types of head-down display devices, head-up display devices, user-worn display devices, or portable display devices, just to name a few non-limiting examples. Some non-limiting examples of the images that are rendered on the display are discussed further below.

The DVE sensors 104 are mounted at different locations on the vehicle 108 and each has a field-of-view (FOV) 103. Each DVE sensor 104 is configured to sense objects in its field-of-view 103 and supply sensor data representative of the sensed objects. Although the number and the locations of the DVE sensors 104 may vary, the number and locations are such that the field-of-view 103-1 of at least a first one of the DVE sensors 104-1 is in a direction above the vehicle, the field-of-view 103-2 of at least a second one of the DVE sensors 104-2 is in a direction below the vehicle, the field-of-view 103-3 of at least a third one of the DVE sensors 104-3 is in a direction to the right of the vehicle, and the field-of-view 103-4 of at least a fourth one of the DVE sensors 104-4 is in a direction to the left of the vehicle 108. As FIG. 1 further depicts, the DVEM system 100 may additionally include, at least in some embodiments, a fifth DVE sensor 104-5 and a sixth DVE sensor 104-6, where the field-of-view 103-5 of the fifth DVE sensor is in a direction forward of the vehicle 108, and the field-of-view 103-6 of the sixth DVE sensor is in a direction rearward of the vehicle 108. It will be appreciated that the DVE sensors 104 may be implemented using any one of numerous suitable sensors. For example, the DVE sensors 102 may be implemented using millimeter Wave (mmW) radar sensors, light detection and ranging (LiDAR) sensors, cameras, or thermal sensors, just to name a few. In a particular preferred embodiment, each is implemented using a mmW radar sensor.

Each DVE sensor 104 may be implemented as a standalone device or as part of another device that is already installed on the vehicle 108. For example, in one embodiment, which is depicted in FIG. 3, a DVE sensor 104 is integrated in a vehicle lighting assembly 300. The depicted vehicle lighting assembly 300 includes a vehicle light 302 that is mounted on or within a housing assembly 304, and the DVE sensor 104 is also mounted on or within the housing assembly 302.

The processing system 106 is in operable communication with the DVE sensors 104 and the display device 102. Before proceeding further, it will be appreciated that the processing system 106 may include one or more processors and computer-readable storage devices or media encoded with programming instructions for configuring the processing system 106. The one or more processors may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the one or more processors.

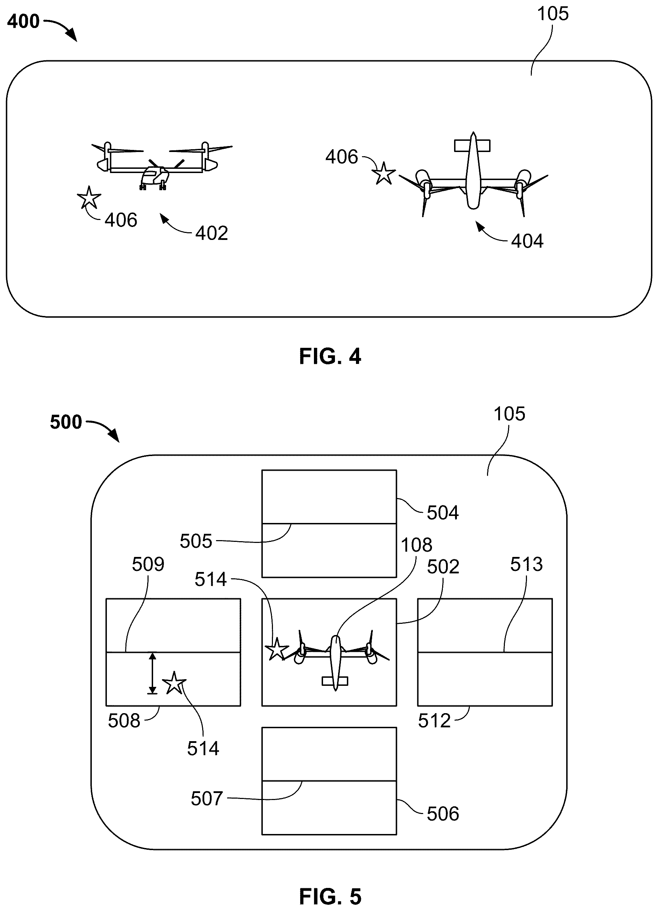

The processing system 106 is coupled to receive the sensor data supplied from each of the DVE sensors 104 and is configured, upon receipt of the sensor data, to process the sensor data from each of the DVE sensors 104 to determine the positions of the sensed objects relative to the vehicle 108 and generate image data representative of a single display image that depicts the positions of the sensed objects relative to the vehicle 108. The processing system 106 additionally supplies image rendering display commands, based on the image data, that causes the display device 102 to render the single display image that depicts the positions of the sensed objects relative to the vehicle 108. It will be appreciated that the single display image that is rendered by the display device 102 on the display 105 may vary. Two example embodiments of single display images are depicted in FIGS. 4 and 5 and will now be described.

Referring first to FIG. 4, it is seen that in one example embodiment, the single display image 400 includes a frontal view vehicle image 402 and a top-down vehicle view image 404. As may be readily seen, the frontal view vehicle image 402 is an image of the vehicle 108 as viewed from in front of the vehicle looking back, and the top-down view vehicle image 404 is an image of the vehicle 108 as viewed from above the vehicle looking down. In addition to the vehicle views, the single display image 400 includes symbols representative of the sensed objects 406 at positions relative to the frontal view vehicle image 402 and the top-down view vehicle image 404.

With reference now to FIG. 5, the example single display image depicted therein includes a top-down view vehicle image 502, a forward horizon line image 504, a rearward horizon line image 506, a left horizon line image 508, and a right horizon line image 512. The top-down view vehicle image 502 is an image of the vehicle 108 as viewed from above the vehicle looking down. The forward horizon line image 504 is an image of a first horizon line 505 that is disposed forward of the vehicle 108. The rearward horizon line image 506 is an image of a second horizon line 507 that is disposed behind of the vehicle 108. The left horizon line image 508 is an image of a third horizon line 509 that is disposed left of the vehicle 108. The right horizon line image 512 is an image of a fourth horizon line 513 that is disposed right of the vehicle 108. In addition to these views, the single display image 500 includes symbols representative of the sensed objects 514 at positions relative to the top-down view vehicle image 502, the first horizon line 505, the second horizon line 507, the third horizon line 509, and the fourth horizon line 513.

The DVEM system disclosed herein is not limited to providing aircraft pilots situational awareness in a single, fixed direction. The system disclosed herein generates a single wide-angle field of view in a degraded visual environment. The proposed single wide-angle view will provide enhanced situational awareness to pilot about the surrounding of the aircraft during DVE. Single wide-angle view will be generated using multiple DVE sensors, mounted on several locations on the aircraft body. The DVE sensors may include mmW Radars. The width of the single wide-angle view may be wide enough to provide required coverage of aircraft external environment ranging from anywhere covering just the aircraft forward area up to entire 360-degree field-of-view around the around vehicle.

Those skilled in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A degraded visual environment mitigation (DVEM) system for a vehicle, comprising:
a display device responsive to image rendering display commands to display one or more images;
one or more degraded visual environment (DVE) sensors mounted on the vehicle, each of the one or more DVE sensors having a field-of-view, each of the one or more DVE sensors configured to sense objects in its field-of-view and supply sensor data representative of the sensed objects; and
a processing system in operable communication with the display device and the one or more DVE sensors, the processing system coupled to receive the sensor data supplied from the one or more DVE sensors and configured, upon receipt of the sensor data, to process the sensor data from the one or more DVE sensors to (i) determine positions of the sensed objects relative to the vehicle, (ii) generate image data representative of a single display image that depicts the positions of the sensed objects relative to the vehicle, and (iii) supply image rendering display commands, based on the image data, that cause the display device to render the single display image that depicts the positions of the sensed objects relative to the vehicle.

2. The system of claim 1, wherein the single display image comprises:
a frontal view vehicle image, which is an image of the vehicle as viewed from in front of the vehicle looking forward;
a top-down view vehicle image, which is an image of the vehicle as viewed from above the vehicle looking down;
symbols representative of the sensed objects at positions relative to the frontal view vehicle image and the top-down view vehicle image.

3. The system of claim 1, wherein the single display image comprises:
a top-down view vehicle image, which is an image of the vehicle as viewed from above the vehicle looking down;
a forward horizon line image, which is an image of a first horizon line that is disposed forward of the vehicle;
a rearward horizon line image, which is an image of a second horizon line that is disposed behind of the vehicle;
a left horizon line image, which is an image of a third horizon line that is disposed left of the vehicle;
a right horizon line image, which is an image of a fourth horizon line that is disposed right of the vehicle; and
symbols representative of the sensed objects at positions relative to the top-down view vehicle image, the first horizon line, the second horizon line, the third horizon line, and the fourth horizon line.

4. The system of claim 1, wherein:
the field-of-view of at least a first one of the DVE sensors is in a direction above the vehicle,
the field-of-view of at least a second one of the DVE sensors is in a direction below the vehicle,
the field-of-view of at least a third one of the DVE sensors is in a direction left of the vehicle,
the field-of-view of at least a fourth one of the DVE sensors is in a direction right of the vehicle.

5. The system of claim 4, wherein:
the field-of-view of at least a fifth one of the DVE sensors is in a direction forward of the vehicle; and
the field-of-view of at least a sixth one of the DVE sensors is in a direction rearward of the vehicle.

6. The system of claim 1, further comprising:
a plurality of vehicle lighting assemblies, each vehicle lighting assembly including a vehicle light mounted on or within a housing assembly,
wherein each DVE sensor is mounted on or within a different one of the housing assemblies.

7. The system of claim 1, wherein the vehicle is an aircraft.

8. The system of claim 7, wherein the aircraft is a rotorcraft.
